# EUROPEAN PATENT APPLICATION

(11) **EP 3 395 175 A2**
(43) Date of publication of application: **31.10.2018**
(21) Application number: 18165557.2
(22) Date of filing: 03.04.2018
(51) Int. Cl.: A22B 3/02

(54) **DEVICE FOR USE IN THE HUMANE SLAUGHTER OF ANIMALS**

(30) Priority: 04.04.2017 GB 201705390
(71) Applicant: Accles & Shelvoke Limited, Sutton Coldfield, West Midlands B76 1AL (GB)
(72) Inventor: HOLLAND, Joseph Eugene, Sutton Coldfield, West Midlands B76 1AL (GB)
(74) Representative: Barker Brettell LLP

(57) **Abstract**

A device (1) for use in the humane slaughter of animals has a barrel (4) in which a captive bolt (5) is received for reciprocal axial movement, the bolt being driven out of the barrel by a driving force provided by an explosive cartridge (7), fired by operation of a trigger (9) acting on an ignition mechanism (10). In one aspect several cartridges are mounted in a magazine (8), and the device has a feed mechanism (12) for moving the magazine (8) following operation of the trigger (9), and a manually-operable arming mechanism (14) arranged to interact with the ignition mechanism (10). The arrangement is such that an operation of the trigger (9) always actuates the feed mechanism (12), and actuates the ignition mechanism (10) only if the arming mechanism (14) is operated before that operation of the trigger (9). In a further aspect the ignition mechanism (10) comprises a firing pin assembly (13), and the arming mechanism (14) is operative against the force of a spring (44) to latch the firing pin assembly (13) in an armed position. Operation of the trigger (9) releases the latch such that the firing pin assembly (13) is moved into an ignition position under the force of the spring (44). In yet a further aspect the barrel (4) is provided with at least one duct for the circulation of a cooling fluid.

## Description

This invention relates a device for use in the humane slaughter of animals, and in particular a device used to stun an animal prior to slaughter.

In such devices a captive bolt housed in a barrel is driven along the barrel by application of a driving force, which may be explosive, pneumatic or hydraulic. The bolt is returned by a return mechanism such as resilient means deformed on the driving stroke. Where the driving force is explosive, it is provided by individual blank cartridges, comprising a brass case containing a propellant and an ignition charge for igniting the propellant when a trigger is actuated. A cartridge is loaded into a breech for each use, and extracted after use so that another one can be loaded. The trigger acts on an ignition mechanism for the ignition charge. The ignition mechanism typically comprises a firing block. Actuation of the trigger moves the hammer to strike the firing block, which in turn strikes the cartridge and lets off the ignition charge. The hammer and firing block are pulled back to extract the spent cartridge, and after a new cartridge is loaded the firing block is moved forward to engagement with the cartridge, while the hammer remains back, ready for the next trigger actuation. The device is safe to use, but it can be awkward in use, because of the need to extract and load a cartridge each time. This also makes it relatively time-consuming to use. The spent cases must also be handled carefully, as if they are dropped they can be hazardous to the user or the animals.

For firearms generally it is of course known to use cartridges loaded into a magazine. Actuation of the trigger brings the next cartridge automatically into a firing position, ready for the next trigger actuation. This enables the firearm to be fired rapidly, which is not required for animal stunning devices, and indeed could be dangerous in an abattoir. Powder-actuated nail guns may also use magazines of blank cartridges, and have an interlock mechanism so that a cartridge is fired only if the forward end of the barrel is in contact with a hard surface and the trigger is actuated. Actuation of the trigger in any other circumstances has no effect at all. These are essential safety features for a nail gun, but are not appropriate for an animal stunning device.

EP 0 197 203 shows an animal stunning device using a cartridge magazine, where the feeding of the cartridge and resetting of the firing pin are carried out simultaneously by manual operation of a lever which opens and closes the breech. The firing pin is latched by a trigger-operated lever, such that operation of the trigger releases the firing pin but has no effect on the feeding of the cartridge.

According to a first aspect of the invention, we provide a device for use in the humane slaughter of animals having a barrel in which a captive bolt is received for reciprocal axial movement, the bolt being driven out of the barrel by a driving force provided by an explosive cartridge, fired by operation of a trigger acting on an ignition mechanism, in which a plurality of cartridges are mounted in a magazine, the device having a feed mechanism for moving the magazine following operation of the trigger, and a manually-operable arming mechanism arranged to interact with the ignition mechanism, the arrangement being such that an operation of the trigger always actuates the feed mechanism, and actuates the ignition mechanism only if the arming mechanism is operated before that operation of the trigger.

This arrangement avoids the need to extract and reload a cartridge for each use by having a magazine, while providing the necessary level of safety, as two distinct actions are needed for firing; the operation of the arming mechanism and the operation of the trigger. It is therefore simple and safe to use. A particular advantage is provided by ensuring that operation of the trigger will also operate the feed mechanism to move the magazine to present the next cartridge ready for firing, but that if the trigger is operated without the arming mechanism being operated beforehand it will just actuate the feed mechanism, and not the ignition mechanism. This action can be used to load and unload the magazine.

Conveniently the device has a body with a handle. The trigger may be mounted in the handle for reciprocal movement, actuation being against the force of a return spring. The barrel and the ignition mechanism are provided in the body. The magazine may be fed from the handle towards the barrel, such that each cartridge is received in a breech part of the barrel.

The feed mechanism conveniently comprises at least one lever operated by reciprocal movement of the trigger. The or each lever is adapted to engage indexing means on the magazine. Operation of the trigger moves the or each lever down and out of engagement with the indexing means. Return movement of the trigger moves the or each lever into engagement with the next indexing means and moves the magazine to put the next cartridge in a firing position. The movement of the or each lever may be controlled by a pair of pins on the lever, at least one of the pins being guided in a channel. The or each lever may have a spring-loaded extension which engages the indexing means.

If there is no need to load and extract a cartridge for each use, the ignition mechanism can be simplified.

According to a second aspect of the invention, we provide a device for use in the humane slaughter of animals having a barrel in which a captive bolt is received for reciprocal axial movement, the bolt being driven out of the barrel by a driving force provided by an explosive cartridge, fired by operation of a trigger acting on an ignition mechanism, in which the ignition mechanism comprises a firing pin assembly, the device having an arming mechanism operative against the force of a spring to latch the firing pin assembly in an armed position, operation of the trigger releasing the latch such that the firing pin assembly is moved into an ignition position under the force of the spring, the arming mechanism comprising a slider mounted on the outside of a body of the device, and acting on the firing pin assembly by means of a projection guided in a channel in the body, the projection engaging a flange on the firing pin assembly in order to move the assembly against the force in the spring

The device is simple to operate as the arming mechanism only has to store the force in the spring and latch the firing pin assembly in the armed position, ready for release when the trigger is operated. The engagement of the projection guided in the channel and flange on the firing pin assembly to latch the firing pin assembly in the armed position means that the user can easily tell that the device is armed. The ignition mechanism of the second aspect may conveniently be used in conjunction with the cartridge magazine of the first aspect of the invention. As the device does not then need to be opened for loading and extracting a cartridge, the firing pin assembly may be mounted in a closed part of a body of the device. This means it is safer, and is not subject to ingress of dirt.

The device preferably has a latch mechanism in the form of a lever, acting on the flange of the firing pin assembly. The lever is moved by operation of the trigger to release the flange. The lever may be pivotally mounted in the body of the device, having a first end acting on the flange of the firing pin assembly and an opposing second end acted on by a trigger-operated cam.

The firing pin assembly may comprise a firing pin acting directly on an ignition charge of a cartridge.

It will be appreciated that the use of the magazine enables the device to be operated more frequently. However, the time taken in extracting and loading cartridges enabled the device to cool down between each firing. With more frequent operation there is a danger of the device overheating.

According to a third aspect of the invention, we provide a device for use in the humane slaughter of animals having a barrel in which a captive bolt is received for reciprocal axial movement, the bolt being driven out of the barrel by a driving force provided by an explosive cartridge, fired by operation of a trigger acting on an ignition mechanism, in which the barrel is provided with at least one duct for the circulation of a cooling fluid.

This prevents the device from overheating.

Conveniently the barrel has inlet and outlet ports connected by the duct or ducts, and the cooling fluid is provided from an external source. The fluid enters at the inlet port, circulates through the duct or ducts, and leaves by the outlet port. The fluid may be a gas such as air, or a liquid such as water.

An embodiment of a device showing the various aspects of the invention is illustrated in the accompanying drawings, in which:-
**Figure 1** is a schematic side view of the internal components of a device for use in the humane slaughter of animals, according to the first and second aspects of the invention; and
**Figure 2** is an exploded view of a magazine of blank cartridges for use in the device of Figure 1.

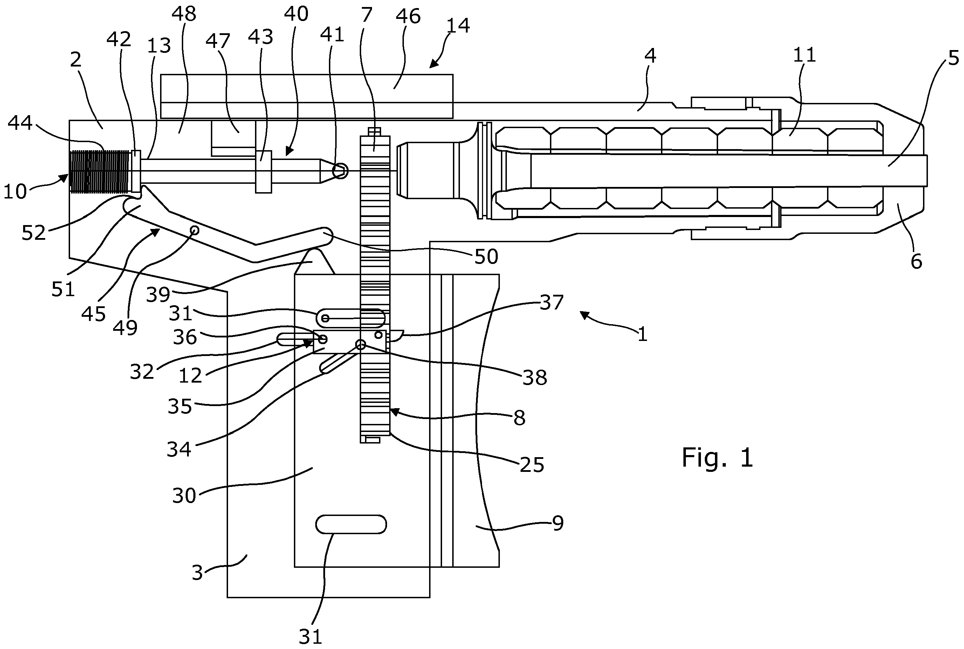

Figure 1 shows a device 1 for use in the humane slaughter of animals, and is a captive bolt device used to stun an animal.

The device 1 comprises a body 2 mounted on a handle 3. The body 2 has a barrel 4 in which a captive bolt 5 is received for reciprocal axial movement. The barrel 4 is closed at its forward end by a muzzle cap 6, and at its rearward end is acted on by an explosive cartridge 7 which provides the force for driving the bolt 5 forwards. The cartridge 7 is incorporated in a magazine 8 containing nine other similar cartridges. The cartridge 7 is fired by pulling a trigger 9 on the handle 3 acting on an ignition mechanism 10. Explosion of the cartridge 7 drives the bolt 5 forwards out of the barrel 4, and the bolt 5 is returned to the starting position shown by resilient recuperator sleeves 11 which are deformed by the forward movement of the bolt 5.

The trigger 9 also operates a feed mechanism 12 for the cartridge magazine 8, but acts on the ignition mechanism 10 comprising a firing pin assembly 13 only if the assembly 13 is armed by a manually-operable arming mechanism 14. The device 1 is shown with the assembly 13 in the armed position.

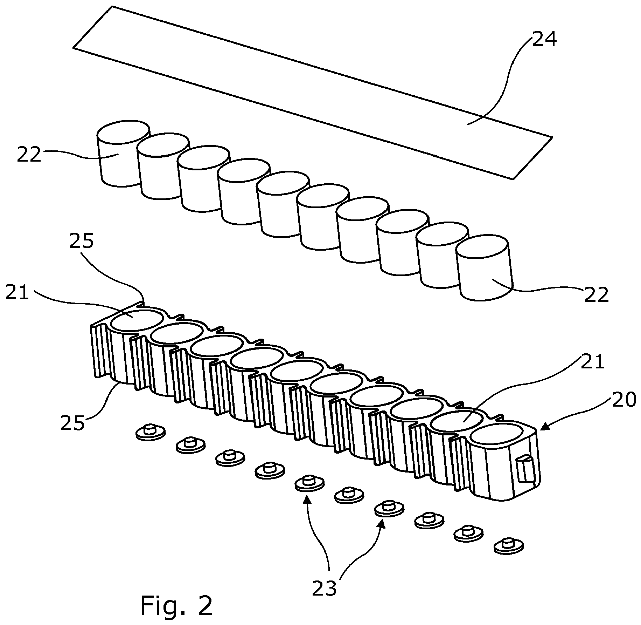

The cartridge magazine 8 will be described first. As shown in Figure 2, the magazine 8 comprises a plastics body 20 having ten cylindrical chambers 21. Each chamber 21 receives a propellant charge 22, and is sealed at an input end by an ignition charge 23. An output strip 24 seals the output end of the chambers. Each chamber 21 thus constitutes a blank cartridge 7. The ignition charge 23 shown in Figure 2 is a centre fire cap. Opposing longitudinal external surfaces of the body 20 are formed with projecting lugs 25 between adjacent pairs of chambers 21. The lugs 25 comprise indexing means and co-operate with the feed mechanism 12 in order to bring the cartridges 7 sequentially into a firing position in the device 1.

Returning to Figure 1, the trigger 9 is a hollow block member 30 of substantially rectangular outline, received in the handle 3. The magazine 8 passes through the open centre of the trigger block member 30. The side elevation of the block member 30 is also of substantially rectangular outline. It is guided to slide in the handle 3, having a pair of spaced straight channels 31 on each side, in which pins (not shown) mounted on the handle 3 are received. The block member 30 is therefore constrained to slide axially forwards and backwards only, against the force in a spring (not shown), which returns it to the position shown after it has been pulled.

The feed mechanism 12 is mounted on the trigger block member 30. The feed mechanism 12 comprises a pair of elevator blocks 35, one on each side of the magazine 8. Only one block 35 is shown; the other is a mirror image, constructed and operating similarly. Each elevator block 35 is a lever of cuboid shape, pivotally mounted at its rearward end by a pin 36 accommodated in apertures 32 in the handle 3. A spring-loaded ratchet tip 37 is pivotally mounted as an extension at the forward end of the elevator block 35. In the initial position shown, the ratchet tip 37 and the forward end of the elevator block 35 engage under a lug 25 of the magazine 8. At an intermediate point the elevator block 35 has a pin 38 which is located in an inclined channel 34 in the trigger block member 30. Thus, when the trigger 9 is operated, the pin 38 is constrained to move along the channel 34, so that the elevator block 35 pivots about the pin 36, which moves in the apertures 32, and its forward end moves downwardly and away from the magazine 8. The elevator block 35 and the ratchet tip 37 thus disengage from the magazine 8.

The ratchet tip 37 also pivots about its mounting so that it disengages fully from the magazine 8. When the trigger block member 30 is returned to the initial position, the elevator block 35 is also returned, with the ratchet tip 37 picking up the next lug 25 on the magazine 8 in order to move it towards the bolt 5, to place the next cartridge 7 in a firing position. The trigger 9 operates the feed mechanism 12 each time it is pulled.

The trigger 9 also operates the ignition mechanism 10, through a cam 39 provided at a top edge, as will be described in more detail below.

The firing pin assembly 13 is mounted in the body 2 behind the barrel 4. The firing pin assembly 13 comprises a cylindrical firing pin 40, having a striking point 41 of reduced diameter at its forward end, and a pair of spaced enlarged flanges 42, 43, one 42 near its rear end and the other 43 at an intermediate point in its length. A spring 44 acts between the body 2 and the rear flange 42 to urge the pin 40 forwardly. The ignition mechanism 10 is completed by a trigger-operated lever 45.

The firing pin assembly 13 is placed in the armed position shown by the manually-operable arming mechanism 14. The arming mechanism 14 comprises a slider block 46 mounted externally on the top of the body 2, and having a projection 47 extending inwardly, and guided for reciprocal axial movement in a channel 48 in the body 2. The projection 46 in its rest position shown engages the intermediate flange 43, and is pulled rearwardly to engage the rear flange 42, compressing the spring 44, until the rear flange 42 is latched in the position shown, by the trigger-operated lever 45. The slider block 46 is biassed to the rest position shown by a spring (not shown).

The trigger-operated lever 45 is of angled outline, and is mounted in the body 2 for pivotal movement about a pin 49. The lever 45 is balanced by springs (not shown). One end 50 of the lever 45 is engaged by the cam 39 on the trigger block member 30. The opposing end 51 is enlarged, with a surface 52 adapted to engage the rear flange 42 of the firing pin 40 to latch it in the position shown.

Operation of the trigger 9 moves the block 30 and cam 39 rearwardly, causing the lever 45 to pivot anti-clockwise. This moves the latch surface 52 out of engagement with the rear flange 42, thus enabling the spring 44 to move the firing pin 40 forwardly to strike the cap of the cartridge 7. When the trigger block 30 and cam 39 return to the rest position shown, the lever 45 also returns but because the firing pin 40 has moved forwards, it will not latch the firing pin 40 in the armed position shown. However, when the slider block 46 of the arming mechanism 14 is moved rearwardly, it will engage the rear flange 42. As the rear flange 42 moves rearwardly it engages the end 51 of the lever 45, moving it anti-clockwise until the latching position is reached.

For use, the user first ensures that there is no magazine 8 loaded and then operates the trigger 9 to make sure that the firing pin 40 is not in the armed position. A magazine 8 is then loaded into the device 1 through an aperture (not shown) in the base of the handle 3. It may be necessary to pull the trigger 9 one or more times to move the magazine 8 so that the uppermost cartridge 7 is in the firing position.

The slider block 46 is then moved rearwardly to arm the firing pin assembly. The trigger 9 is operated causing the firing pin 40 to be released and to move forwards, striking the cap of the cartridge 7, which halts movement of the firing pin 40. The strike on the cap detonates the cartridge 7 and drives the bolt 5 out of the barrel 4. Operation of the trigger 9 also acts on the elevator block 35 of the feed mechanism 12, bringing it out of engagement with the magazine 8. On return of the trigger 9 the elevator block 35 is also returned, and engages the next set of lugs 25 on the magazine 8, to move it upwards, taking the spent cartridge 7 out of the firing position and bringing the next one into the firing position. The bolt 5 is returned by the recuperator sleeves 11. The firing pin 40 remains in the forward position until the slider block 46 is moved rearwardly again to latch and arm the firing pin assembly 13, and enable a cartridge 7 to be detonated when the trigger 9 is pulled again.

An aperture (not shown) at the top of the body allows the magazine 8 to exit as the cartridges are used and the magazine moves upwards. If there are unused cartridges in the magazine when the user finishes using the device, the magazine can be removed by repeated trigger actuation without operating the arming mechanism 14.

The device 1 therefore enables more rapid operation, because it is not necessary to load and extract a cartridge each time it is used, as the magazine 8 contains several cartridges 7, which are brought automatically and sequentially into the firing position on operation of the trigger 9. It is also extremely safe, because the arming mechanism 12 must be operated manually if the trigger 9 is also to act on the ignition mechanism. This means that the magazine 8 can be loaded and unloaded by operation of the trigger 9, without needing to fire the cartridges.

The more rapid operation of the device 1 enabled by the first and second aspects of the invention also means that the barrel 4 does not have time to cool down between successive uses. In a further modification (not shown) the barrel 4 is provided with inlet and outlet ports for a cooling fluid, such as air or water, the ports being connected by ducts or channels in the barrel 4. The inlet and outlet ports are connected to a cooling device, which circulates the fluid so that cooled fluid enters at the inlet port, flows through the channels to cool the barrel 4, and exits through the outlet port for return to the cooling device. The barrel 4 can therefore be cooled continuously.

## Claims

1. A device (1) for use in the humane slaughter of animals has a barrel (4) in which a captive bolt (5) is received for reciprocal axial movement, the bolt being driven out of the barrel by a driving force provided by an explosive cartridge (7), fired by operation of a trigger (9) acting on an ignition mechanism (10), in which a plurality of cartridges are mounted in a magazine (8), the device having a feed mechanism (12) for moving the magazine following operation of the trigger, and a manually-operable arming mechanism (14) arranged to interact with the ignition mechanism, the arrangement being such that an operation of the trigger (9) always actuates the feed mechanism (12), and actuates the ignition mechanism (10) only if the arming mechanism (14) is operated before that operation of the trigger (9).

2. A device as claimed in claim 1, in which the device has a body (2) with a handle (3), the trigger (9) being mounted in the handle for reciprocal movement, and actuated against the force of a return spring.

3. A device as claimed in claim 2, in which the barrel and the ignition mechanism are provided in the body (2), and the magazine (8) is fed from the handle (3) towards the barrel (4), such that each cartridge (7) is received in a breech part of the barrel.

4. A device as claimed in any preceding claim, in which the feed mechanism (12) comprises at least one lever (35) operated by reciprocal movement of the trigger (9) and adapted to engage indexing means (25) on the magazine.

5. A device as claimed in claim 4, in which operation of the trigger (9) moves the or each lever (35) down and out of engagement with the indexing means (25), and return movement of the trigger (9) moves the or each lever (35) into engagement with the next indexing means (25) and moves the magazine (8) to put the next cartridge (7) in a firing position.

6. A device as claimed in claim 4 or claim 5, in which movement of the or each lever (35) is controlled by a pair of pins (36, 38) on the lever, at least one of the pins being guided in a channel.

7. A device as claimed in any of claims 4 to 6, in which the or each lever (35) has a spring-loaded extension (37) which engages the indexing means (25).

8. A device (1) for use in the humane slaughter of animals having a barrel (4) in which a captive bolt (5) is received for reciprocal axial movement, the bolt being driven out of the barrel by a driving force provided by an explosive cartridge (7), fired by operation of a trigger (9) acting on an ignition mechanism (10), in which the ignition mechanism comprises a firing pin assembly (13), the device having an arming mechanism (14) operative against the force of a spring (44) to latch the firing pin assembly (13) in an armed position, operation of the trigger (9) releasing the latch such that the firing pin assembly (13) is moved into an ignition position under the force of the spring (44), the arming mechanism (14) comprising a slider (46) mounted on the outside of a body (2) of the device, and acting on the firing pin assembly (13) by means of a projection (47) guided in a channel (48) in the body, the projection engaging a flange (42) on the firing pin assembly (13) in order to move the assembly against the force in the spring (44).

9. A device as claimed in claim 8, in which the device has a latch mechanism in the form of a lever (45) acting on the flange (42) of the firing pin assembly (13).

10. A device as claimed in claim 8, in which the lever (45) is moved by operation of the trigger (9) to release the flange (42).

11. A device as claimed in claim 9 or claim 10, in which the lever (45) is pivotally mounted in the body (2) of the device, having a first end (52) acting on the flange (42) of the firing pin assembly and an opposing second end (50) acted on by a trigger-operated cam (39).

12. A device as claimed in any of claims 8 to 11, in which the firing pin assembly (13) comprises a firing pin (40) acting directly on an ignition charge of a cartridge (7).

13. A device for use in the humane slaughter of animals having a barrel (4) in which a captive bolt (5) is received for reciprocal axial movement, the bolt being driven out of the barrel by a driving force provided by an explosive cartridge (7), fired by operation of a trigger (9) acting on an ignition mechanism (14), in which the barrel (4) is provided with at least one duct for the circulation of a cooling fluid.

14. A device as claimed in claim 13, in which the barrel (4) has inlet and outlet ports connected by the duct or ducts, and the cooling fluid is provided from an external source, the arrangement being such that the fluid enters at the inlet port, circulates through the duct or ducts, and leaves by the outlet port.

15. A device as claimed in claim 13 or claim 14, in which the fluid is a gas such as air, or a liquid such as water.
